# EUROPEAN PATENT SPECIFICATION

(11) **EP 3 906 268 B1**
(45) Date of publication and mention of the grant of the patent: **23.11.2022**
(21) Application number: 19829610.5
(22) Date of filing: 20.12.2019
(51) Int. Cl.: C08G 18/28, C09D 5/04, C09D 7/43, C08G 18/32, C08G 18/75, C08G 18/76, C08G 18/80, C08K 5/09, C08K 5/21

(54) **RHEOLOGY CONTROL ADDITIVE CONTAINING UREA COMPONENT**
RHEOLOGIESTEUERUNGSADDITIV MIT HARNSTOFFKOMPONENTE
ADDITIF DE RÉGULATION DE RHÉOLOGIE CONTENANT UN COMPOSANT D'URÉE

(30) Priority: 04.01.2019 EP 19150341
(43) Date of publication of application: 10.11.2021
(73) Proprietor: BYK-Chemie GmbH, 46483 Wesel (DE)
(72) Inventor: KNAPPKE-BONGARTZ, Christiane, 46483 Wesel (DE); NAGELSDIEK, René, 46483 Wesel (DE); BÜHNE, Sylvia, 46483 Wesel (DE); JOHANN, Meike, 46483 Wesel (DE); MÜLLEMANN, Jasmin, 46483 Wesel (DE); JACOBS, Berthold, 46483 Wesel (DE)
(74) Representative: Altana IP Department
(86) International application number: PCT/EP2019/086765
(87) International publication number: WO 2020/141120

(56) References cited:
- US-A1- 2012 226 075
- US-A1- 2017 037 262
- US-A1- 2017 044 378

## Description

The invention relates to a composition comprising an urea group containing component and a carboxylic acid group containing component, its preparation and its use as rheology control agent (hereinafter also referred to as "rheology additives" or "rheology agents"). Additionally, the invention relates to rheology control agents comprising urea group and carboxylic acid components containing products and their use. The invention further relates to liquid compositions comprising the urea group and carboxylic acid components containing products and a process of controlling the rheology of a liquid composition.

The rheology of liquid systems is controlled using bentonites and silicas, which may optionally be organically modified, hydrogenated castor oil, and polyamide waxes. These substances are mostly dry solids, which must be processed to a semi-finished form using solvents and shear forces, and/or introduced into the liquid system by means of targeted temperature control. If these temperatures are not observed, crystallites occur in the finished system, and can lead not only to poor rheological performance, but also to detrimental properties of the products.

In case the liquid systems are coating compositions, these rheological auxiliaries frequently lead to instances of clouding and haze in clear, transparent coatings. Moreover, operating with dry, powderous products, which cause dusts during processing, may be technologically unfavorable.

To avoid those disadvantages liquid rheological auxiliaries are used comprising solutions of particular urea components as described in EP 1188779 A. Often polar/aprotic diluents are used. Alternatively, instead of classical organic diluents ionic liquids can be used as described in DE 102008059702 A. These are molten salts, which are fluid at moderate temperatures below 80°C.

US2012226075 A1 concerns a specific polyurea as rheology control agent suitable for avoiding the propensity to sagging.

Especially thick-film-systems are prone to sagging at vertical surfaces and therefore are in need of enhanced rheological auxiliaries. Often epoxy-based coatings are used in thick-film-systems. In conventional epoxy systems, dry formulations with amides and organically modified clays or liquid thixotropic agents are used to obtain adequate coating thicknesses. As opposed to those conventional systems, the effectiveness of rheological additives for solvent-free systems is insufficient. Due to health and environment protection there is an increasing demand of those solvent-free systems.

It was an object of the present invention, therefore, to provide new rheology control agents. These new agents ought not to have the disadvantages stated in the abovementioned specifications. More particularly the intention was to find rheology control agents having a pronounced anti-sag behavior especially in solvent-free thick-film-systems. Particularly, a high layer thickness of applied coatings should result without sagging.

Surprisingly it has been found that these objectives can be achieved by a composition comprising a) 10 to 60 % by weight of one or more urea components having a number average molecular weight Mn above 350 g/mol, determined by gel permeation chromatography (eluent: solution of lithium bromide (content 5g/l) in dimethylacetamide, standard: polymethylmethacrylate g/mol, column temperature: 80°C) according to DIN 55672 part 2 (year: 2008) and b) 40 to 90 % by weight of one or more carboxylic acid components according to formula (I) HO-R¹-COOH, wherein R¹ represents an organic group having 3 to 75 carbon atoms, wherein the % by weight are calculated on the sum of components a) and b).

Urea components means any product containing one or more NH-(C=O)-NH groups.

Suitably, the composition comprises 10 to 60 % by weight of the one or more urea components. Preferably, the composition comprises 20 to 50 % by weight of the one or more urea components, more preferably 25 to 45 %, most preferably 30 to 40 % by weight.

Suitably, the one or more urea components have a number average molecular weight in the range of 350 to 60.000 g/mol.

The number average molecular weight (Mn) of the one or more urea components of the present invention is above 350 g/mol. Preferably, the number average molecular weight is above 500 g/mol, more preferably above 750 g/mol, and most preferably above 1000 g/mol. Furthermore, the number average molecular weight (Mn) of the one or more urea components of the present invention is preferably below 30000 g/mol, determined as described below; more preferably, it is below 20000 g/mol, below 10000 g/mol, or even below 8000 g/mol.

The number average molecular weight can be determined by gel permeation chromatography (eluent: solution of lithium bromide (content 5g/l) in dimethylacetamide, standard: polymethylmethacrylate, column temperature: 80°C) according to DIN 55672 part 2 (year: 2008). Alternatively, the number average molecular weight may be determined by calculation. Additionally, the number average molecular weight for small molecules up to 1000 g/mol may be determined by other methods such as mass spectroscopy.

The invention further relates to a process for the production of a composition comprising the steps of adding
a) 10 to 60 % by weight of one or more urea components having a number average molecular weight Mn above 350 g/mol determined by gel permeation chromatography (eluent: solution of lithium bromide (content 5g/l) in dimethylacetamide, standard: polymethylmethacrylate, column temperature: 80°C) according to DIN 55672 part 2 (year: 2008) and
b) 40 to 90 % by weight of one or more carboxylic acid components according to formula (I) HO-R¹-COOH, wherein R¹ represents an organic group having 3 to 75 carbon atoms, wherein the % by weight are calculated on the sum of components a) and b).

In one preferred embodiment of the invention, the urea component of the composition comprises aromatic groups. The aromatic groups are independently selected from alkylsubstituted aromatic hydrocarbyl groups having 7 to 12 carbon atoms. Preferred are phenylene groups, having one or more alkyl groups bound to the aromatic ring as substituents, the alkyl group or alkyl groups preferably containing 1 to 4, more preferably 1 or 2 carbon atoms and most preferred being methyl groups. Preferred aromatic groups are toluylene groups.

In another preferred embodiment, the urea component of the composition comprises araliphatic groups, preferably xylylene groups CH₂-C₆H₄-CH₂. In another preferred embodiment, the urea component of the composition comprises aliphatic groups, preferably linear C2-C8 alkylene groups, preferably ethylene, propylene, butylene, and hexamethylene. In a very preferred embodiment, the urea component of the composition comprises both toluylene groups and xylylene groups.

In another embodiment of the invention, the urea component of the composition has a structure selected from the examples of compound B in US 2017/0044378 A1 and compound B in US 2016/0185985 A1.

The urea compound may be prepared in a known way by reaction of corresponding isocyanates with amines. Preparation processes for urea compounds of this kind are described in more detail for example in US 7250487 B2, US 7348397 B2, EP 13 96 510 A1, EP 2 292 675 A1. Preferably, urea compounds may be prepared according to the examples of the present invention.

Suitably, the molecules of the urea component contain an average of at least two urea groups. In one embodiment, the urea component comprises molecules containing at least one urea group and at least one urethane group. In another embodiment, the urea component comprises molecules containing at least one urea group and at least two urethane groups. In a different embodiment, the urea component comprises molecules containing at least two urea groups and at least two urethane groups. In a different embodiment of the invention, urethane groups may even be absent.

In another embodiment, the urea component of the composition comprises one or more carboxylic acid groups. Preferably, 12-hydroxystearic acid is chemically bound to the urea component of the composition. In a different embodiment, the urea component comprises no carboxylic acid groups.

The composition comprises one or more carboxylic acid component according to formula (I) HO-R¹-COOH. Generally, the carboxylic acid components according to the invention are present as carboxylic acid groups, they are not present in their salt forms.

According to the present invention R¹ represents an organic group having 3 to 75 carbon atoms. The term "organic group" denotes for a carbon containing group selected from "aliphatic groups" and "aromatic groups", wherein the term "aliphatic group" encompasses non-aromatic, acyclic and cyclic, saturated and unsaturated, linear and branched carbon containing groups. However, organic groups can also contain aliphatic and aromatic moieties at the same time. E.g. an aliphatic group which contains one or more aromatic groups as substituents is called araliphatic group. Of course, aromatic groups may comprise aliphatic substituents. Organic groups may also contain one or more heteroatoms. Thus, the carboxylic acid can be organically modified and can have organic moieties, such as aromatic or alkoxylated moieties, as well as ester-groups which may form dimers, trimers or oligomers.

In a preferred embodiment, the group R¹ of the composition represents an organic group having 3 to 75 carbon atoms, more preferred 5 to 29, even more preferred 9 to 23 carbon atoms. In another preferred embodiment, R¹ is an organic group substituted with 1 to 3 hydroxy groups, with the preferred number of carbon atoms as described.

Preferably, R¹ represents a hydrocarbyl group having 9 to 23 carbon atoms. The term "hydrocarbyl group" denotes for an organic group that consists of carbon and hydrogen atoms, only. The hydrocarbyl group represented by R¹ preferably has 9 to 23 carbon atoms, more preferably 11 to 21 carbon atoms and most preferably 15 to 19 carbon atoms. Suitably, R¹ is aliphatic. It is also preferred that R¹ is a saturated aliphatic group. It is also preferred that R¹ is a linear aliphatic group.

Examples of suitable carboxylic acid components according to formula (I) are 12-hydroxystearic acid, 14-hydroxystearic acid, 16-hydroxystearic acid, 6-hydroxystearic acid, 9-hydroxystearic acid, 10-hydroxystearic acid, 9,10-dihydroxystearic acid, glycolic acid, 5-hydroxyvaleric acid, 6-hydroxycaproic acid, ricinoleic acid, 12-hydroxy lauric acid, 5-hydroxylauric acid, 5-hydroxydecanoic acid, 4-hydroxydecanoic acid, 14-hydroxyeicosanoic acid, 16-hydroxyhexadecanoic acid. The acids can be enantiomerically pure, racemic or a mixture of enantiomers. Particularly preferred acids are selected from 12-hydroxystearic acid, 9-hydroxy-stearic acid, 10-hydroxystearic acid, 14-hydroxyeicosanoic acid, 14-hydroxystearic acid, 16-hydroxystearic acid, 6-hydroxystearic acid, 9,10-dihydroxystearic acid, very much preferred are 12-hydroxystearic acid and 14-hydroxystearic acid.

In one embodiment, the composition comprises one or more organic diluents c). The organic diluent c) does not contain urea groups, and typically comprises an aprotic polar diluent. The organic diluent may be any organic compound, which is capable of reducing the viscosity of the composition. The organic diluent includes volatile organic solvents as well as non-volatile organic solvents. Examples of suitable diluents include amides, preferably cyclic amides (i. e. lactams), non-cyclic dialkyl amides of mono- and difunctional carbonic acids, sulfoxides, preferably dimethyl sulfoxide and/or ionic liquids. Particularly suitable are diluents selected from the group of N-alkyl-lactams, preferable N-alkyl butyrolactams and even more preferred N-C1-C12-alkyl-butyrolactams. The diluents used for synthesis of the urea compound can also be used as carrier media of the composition of the invention.

Examples of N-alkylbutyrolactams are N-methylbutyrolactam, N-ethylbutyrolactam, N-butylbutyrolactam, N-octylbutyrolactam and N-hydroxyethyl butyrolactam. Examples of linear amides are N,N-dimethylformamide, N,N-dimethylacetamide, N,N-dialkylamidoalkyl esters, N,N-dialkylamidoalkyl ethers, hexamethylphosphoric triamide and acylmorpholines. Preferred examples of these are also N,N-dimethylamidoalkyl ester, N,N-dimethylamidoalkyl ether, N-formylmorpholine and N-acetylmorpholine.

In another preferred embodiment, the one or more organic diluents c) of the composition are ionic liquids. In the context of the present invention, so-called ionic liquids are organic salts with a melting point below 80°C. Examples of ionic liquids are substituted imidazolium salts, e.g. 1-ethyl-3-methylimidazolium acetate, 1-ethyl-3-methylimidazolium acetate, 1-ethyl-3-methylimidazoliumethylsulfate, 1-butyl-3-methylimidazolium ethylsulfate, 1-ethyl-3-methylimidazoliumthiocyanate and 1-butyl-3-methylimidazolium thiocyanate. Ionic liquids may be combined with the non-ionic organic diluents mentioned above.

In some embodiments, the composition according to the present invention comprises one or more salts d), which are different from the ionic liquids mentioned above and which have a melting point higher than 80° C.

The preparation of the urea compound may take place in the presence of one or more salts d). The salts d) according to the present invention are containing cations of elements of the main groups I and II of the Periodic Table of the Elements (alkali and alkaline earth metals) or ammonium ions (incl. substituted ammonium ions, e.g., alkylammonium ions) and mixtures thereof. Preferably lithium, calcium or magnesium, particularly preferably lithium and calcium cations, and containing as anions preferably monovalent anions, particularly preferably halides, pseudohalides, formate, acetate and/or nitrate, most particularly preferably chloride, acetate and/or nitrate. Particularly preferred as salts are inorganic lithium salts, such as lithium chloride or lithium nitrate, for example as well as ammonium salts, for example alkyl ammonium salts, in particular quaternary ammonium salts, such as tetra-alkyl ammonium halides.

It is preferred that the composition comprises 10 to 85 % by weight of an organic diluent c), more preferred 35 to 80 % by weight and most preferred 45 to 75% by weight, wherein the % by weight are calculated on the sum of a), b), c) and d).

Preferably the composition comprises 0.0 to 8.0 % by weight of one or more salts d), more preferably 0.5 to 5.0 % by weight and most preferably 0.8 to 3.5 % by weight, wherein the % by weight are calculated on the sum of a), b), c) and d).

The composition may be in solid or liquid form. When the composition comprises one or more organic diluents c), the composition is preferably liquid.

In a preferred embodiment, the composition comprises
i. the one or more urea components a) having a number average molecular weight Mn above 350 g/mol and the one or more carboxylic acid components b) according to

   formula (I) HO-R¹-COOH,

   wherein R¹ represents an organic group having 3 to 75 carbon atoms,
   wherein the sum of a) and b) is 15 to 90 % by weight,
ii. 10.0 to 85.0 % by weight of one or more organic diluents c), and
iii. 0.0 to 8.0 % by weight of one or more salts d),
wherein the % by weight are calculated on the sum of a), b), c) and d).

In another preferred embodiment, the composition comprises
a) 3.0 to 40.0 % by weight of one or more urea components having a number average molecular weight Mn above 350 g/mol,
b) 12.0 to 60.0 % by weight of one or more carboxylic acid components according to

   formula (I) HO-R¹-COOH,

   wherein R¹ represents an organic group having 3 to 75 carbon atoms,
c) 10.0 to 85.0 % by weight of one or more organic diluents, and
d) 0.0 to 8.0 % by weight of one or more salts,
wherein the % by weight are calculated on the sum of a), b), c) and d)
with the proviso that
the one or more urea components a) are present in an amount of 10 to 60 % by weight, and the one or more carboxylic acid components b) are present in an amount of 40 to 90 % by weight, calculated on the sum of components a) and b).

In a further embodiment, the invention also relates to a process for the production of the inventive composition.

The process comprises the steps of mixing
a) 3.0 to 40.0 % by weight of one or more urea components having a number average molecular weight Mn above 350 g/mol, determined by gel permeation chromatography (eluent: solution of lithium bromide (content 5g/l) in dimethylacetamide, standard: polymethylmethacrylate, column temperature: 80°C) according to DIN 55672 part 2 (year: 2008)
b) 12.0 to 60.0 % by weight of one or more carboxylic acid components according to formula (I) HO-R¹-COOH, wherein R¹ represents an organic group having 3 to 75 carbon atoms,
c) 10.0 to 85.0 % by weight of one or more organic diluents, and
d) 0.0 to 8.0 % by weight of one or more salts,
wherein the % by weight are calculated on the sum of a), b), c) and d).

In a further embodiment, the process comprises the steps of
1) Providing one or more urea components having a number average molecular weight Mn above 350g/mol,
2) Optionally, reacting the one or more urea components with one or more alcohol and/or glycol components, and
3) adding one or more carboxylic acid components according to

   formula (I) HO-R¹-COOH.

If the urea-component comprises isocyanate groups, reacting the one or more urea component with one or more alcohol and/or glycol components is preferred.

Suitably, the mixture of components a) and b) of the composition together has an acid number in the range of 50 to 180 mg KOH/g, more suitably 70 to 160 mg KOH/g and most suitably 90 to 140 mg KOH/g.

The mixture of components a), b), c) and d) of the composition together may preferably have an acid number in the range of 20 to 60 mg KOH/g, more preferably 25 to 55 mg KOH/g and most preferred 30 to 50 mg KOH/g.

The acid number was determined according to DIN EN ISO 2114 (June 2002), using N-ethyl-pyrrolidone as solvent.

The composition according to the present invention is preferably used to control the rheology of a liquid composition, for example as a thickening agent and/or thixotropic agent.

Though the composition according to the present invention is suitable to be used as the only control agent to adjust the rheology of a liquid formulation, it is also possible to combine the inventive composition with any other type of rheology control agent, for example inorganic compounds (like silica or clays) or organic compounds. Preferred organic compounds that can be used in combination with the inventive composition are polyamine compounds, i.e., molecules having two or more primary, secondary, or tertiary amine groups or their salts; such polyamine compounds can be low molecular weight organic molecules, but also polymer molecules. Preferred examples of such molecules having two or more amine groups are polyalkyleneamines, polyaminoamides, polyvinylamines, polyallylamines, and polyalkanolamines. It is known to someone skilled in the art that these polyamines can also be chemically modified in a way that the molecule still contains two or more amine groups. Examples to obtain these modified polyamines are reactions of non-modified polyamines with acids (and their derivatives, such as acid anhydrides or halides), epoxides, isocyanates, and acrylates. A preferred class of polyamines as a second rheology control agent to be used in combination with the inventive compositions is polyethyleneimines (available by ring opening polymerization of aziridines). Suitable examples are available from BASF under the Lupasol tradename, e.g., Lupasol FG, Lupasol G20, Lupasol PR 8515, Lupasol WF, Lupasol P, Lupasol PO 100.

If the liquid composition (e.g., a coating formulation or a thermoset formulation) in which a combination of the inventive composition and a further rheology control agent are used in is a two-component system (like a polyurethane system, an epoxy system, a polyaspartics system), it can be of advantage to use the inventive composition in one of the two components and the further rheology control agent in the other component. For example, if the inventive composition is used in combination with a second rheology additive based on a polyamine to control the rheology of a two-component epoxy formulation, it is of advantage to include the inventive composition in the epoxy component, and to include the polyamine based rheology agent in the hardener component.

A further aspect of the current invention is therefore also the use of the inventive composition in combination with a further rheology control agent to control the rheology of a liquid composition. In a preferred embodiment, this relates to the use of the inventive composition in combination with a polyamine compound to control the rheology of a liquid composition. In a very preferred embodiment, this relates to the use of the inventive composition in combination with a polyethyleneimine compound or its derivative to control the rheology of a liquid composition.

The composition according to the present invention can be used to adjust the rheological profile of a liquid composition. Therefore, another object of the present invention is a process for rheology adjustment, comprising the step of adding the liquid compositions of the present invention to a coating composition, a clear coat composition, a lacquer, a plastic formulation, a pigment paste, an effect pigment paste, a sealant formulation, a cosmetic formulation, a homecare or industrial care formulation (including perfume and fragrance formulations), a ceramic formulation, an adhesive formulation, a liquid formulation for use in gas and oil production, a composition for the manufacture of electrical components and circuits, a liquid formulation for use in energy storage media, a cleaning agent, a potting compound, a building material formulation, a lubricant, a filling compound, a wax emulsion, a metalworking fluid, a metal-processing product, a liquid composition in the form of a spraying agent, a so-called deposition aid (e.g., for use in plant protection agents or for the general purpose of drift reduction), an ink, a printing ink and an ink jet ink. Moreover, the liquid composition may be used as corrosion protection in the field of marine and protective coatings.

Further liquid compositions wherein the composition and liquid composition of the present invention can be used are solvent-based or solvent-free paints, printing inks and inks and lacquers as e.g. lacquers for varnishing of plastics, wire enamels, coating compositions for coating foodstuffs and seeds, and as so-called color resists, which are used for color filters, for example in flat panel displays such as liquid-crystal displays. The field of application of lacquers also includes pasty materials which generally have a very high proportion of solids and a small proportion of liquid components, for example so-called pigment pastes or also pastes based on effect pigments, for example metal effect pigments such as, for example, aluminum pigments, silver pigments, brass pigments, zinc pigments, copper pigments, bronze pigments such as gold bronzes, fire-dyed bronzes or iron oxide aluminum pigments. The effect pigments also include, for example, interference pigments or pearlescent pigments such as, for example, metal oxide mica pigments, fish silver, bismuth oxide chloride or basic lead carbonate.

The plastic formulations can be liquid or non-liquid starting materials to produce plastic materials, which are preferably converted into a duromer by a chemical cross-linking process ("curing"). Preferred plastic preparations are unsaturated polyester resins, vinyl ester resins, acrylate resins, epoxy resins, polyurethane resins, formaldehyde resins (such as melamine-formaldehyde or urea-formaldehyde). These can be cured under very different conditions, e.g. at room temperature (cold-curing systems) or at elevated temperature (hot-curing systems), optionally with application of pressure ("closed mold" application, sheet molding compound or bulk molding compound). The plastic formulations also include PVC plastisols. The cosmetic preparations can be various liquid compositions, which are used in the so-called personal care or healthcare sector, e.g. lotions, creams, pastes such as, for example, toothpaste, foams such as, for example, shaving foam, gels such as, for example, shaving gels, shower gels or active ingredients in gel formulations, hair shampoos, liquid soaps, nail varnishes, lipsticks and hair dyes.

The so-called wax emulsions are preferably dispersions of solid waxes in particulate form at room temperature in water or an organic medium.

The building material formulations may be liquid or paste-like materials, which are used in the construction sector and solidify after curing. Examples are hydraulic binders such as concrete, cement, mortar, tile glue and plaster.

The metal working fluids may be cutting liquids, drilling fluids (such as are used in metal processing), or forging fluids or lubricants in general. Potential other areas are release agents (often in the form of aqueous emulsions, for example, aluminum die casting and foundry applications), foundry washes (foundry coatings) and liquids for the surface treatment of metals (for example "surface finishing", surface treatment and plating).

The lubricants are means, which are used for lubrication, that is to say, which serve to reduce friction and wear, as well as to provide power, cooling, vibration dampening, sealing action and corrosion protection; liquid lubricants being preferred here.

Cleaning agents can be used to clean a wide range of objects, for example in the area of homecare or industrial care. They effect or assist the removal of impurities, residues and attachments. The cleaners also include detergents (primarily for cleaning textiles, their precursors, leather, and dish), and personal care products. Formulations containing perfumes and other fragrances (either as liquid raw materials or in encapsulated form), e.g., as perfume gels, also belong to this area of application.

Liquid formulations used for gas and oil production are formulations used to develop and exploit a deposit. Drilling fluids or "drilling muds" are preferred examples. Another application example are liquids used to prepare or perform a hydraulic fracturing process.

The adhesives can be all adhesive materials which are liquid under processing conditions and which can join parts by surface adhesion and internal strength.

Another subject of the present invention is therefore a liquid composition as described for the preferred application fields above, in which the composition according to the invention comprising a) and b) and optionally c) and/or d) is used.

The liquid compositions of the invention may further comprise customary additives. Examples of additives are antiblocking agents, stabilizers, antioxidants, pigments, wetting agents, dispersants, emulsifiers, rheology additives, UV absorbers, free-radical scavengers, slip additives, defoamers, adhesion promoters, leveling agents, waxes, nanoparticles, film-forming auxiliaries, and flame retardants. Preferred additives are wetting agents, dispersants and/or emulsifiers and rheology additive which are different from the composition of the present invention, such as clay based thickeners (including organoclays), other urea compounds, (poly)amides, polysaccharides (like cellulose derivatives, guar, xanthan), polyacrylates, or associative thickeners. In an example, the inventive composition can be used in combination with other thickeners affecting the low, medium, and/or high shear performance of the liquid composition that needs to be modified concerning its rheological behavior.

Yet another subject of the present invention is an article coated with a liquid composition, the liquid composition being a coating composition comprising the inventive composition, and even more preferably a coating composition comprising an epoxy resin, like a marine and protective coating composition.

The invention also relates to a composition, which is liquid at a temperature of 23 °C comprising 0.1 to 7.5 % by weight, calculated on the total weight of the liquid composition, of a mixture of
a) one or more urea components having a number average molecular weight Mn above 350 g/mol, determined by gel permeation chromatography (eluent: solution of lithium bromide (content 5g/l) in dimethylacetamide, standard: polymethylmethacrylate, column temperature: 80°C) according to DIN 55672 part 2 (year: 2008) and
b) one or more carboxylic acid components according to formula (I) HO-R¹-COOH,
wherein R¹ represents an organic group having 3 to 75 carbon atoms
and wherein the weight ratio of components a) : b) is in the range of 10:90 to 60:40.

In one embodiment, the liquid composition comprises a further rheology control agent, which is preferably a polyamine compound and more preferably a polyethyleneimine compound or its derivative.

The term "liquid composition" according to the present invention denotes a composition, i.e. a matter of at least two substances, being liquid at 23° C and 100 kPa. Such liquid compositions are, for example, solvent borne, aqueous, or solvent-free. The liquid composition is preferably non-aqueous.

In a preferred embodiment the weight ratio of components a) : b) is in the range of 10:90 to 60:40, more preferably from 15:85 to 70:30, even more preferably from 20:80 to 60:40.

In a preferred embodiment, the liquid composition comprises between 0.0 and 7.0 % of water, calculated on the total weight of the composition. More preferably, the liquid composition comprises less than 5.0 % of water, calculated on the total weight of the composition. For example, the liquid composition comprises less than 3.0 % or less than 1.0% of water, calculated on the total weight of the composition.

In a preferred embodiment, the liquid composition comprises between 0.0 and 10.0 % by weight, calculated on the total weight of the liquid composition, of a volatile organic solvent. More preferably, the liquid composition comprises less than 8.0 % or even less than 5.0 % by weight, calculated on the total weight of the liquid composition, of a volatile organic solvent. For example, the liquid composition comprises less than 3.0 % by weight of a volatile organic solvent, calculated on the total weight of the liquid composition. It is a very preferred embodiment of the invention that the liquid composition is a solvent free coating composition. A volatile organic solvent is a solvent which has a boiling point of less than 250 °C at 1013 mbar. Benzyl alcohol is not considered to be a volatile organic solvent.

Examples of suitable volatile organic solvents include esters, such as n-butyl acetate, and ketones, such as methyl ethyl ketone, alcohols (excluding benzyl alcohol), aliphatic hydrocarbons, aromatic hydrocarbons (e.g. xylene).

In one embodiment, the liquid composition according to the present invention comprises a film-forming resin, preferably a resin having one or more epoxy groups. It is a very preferred embodiment that the film-forming resin is a solvent free epoxy resin. Suitable examples are Epon 825, Epon 826, Epon 827, Epon 828, Epon 862, Epon 863, Epon 869, Epon 824, Epon 829H, Epon 8281, Epon 233, Epon 813, Epon 8131 and Epon 8132 (all Epon-types by Hexion), Araldite GY 6010, Araldite GY 783, Araldite GY 240, Araldite 250, Araldite 260 (all Araldite types by Huntsman), D.E.R. 331, D.E.R. 353, D.E.R. 354 (all D.E.R. types by Olin).

Other examples of film-forming resins are polyurethanes (1-component and 2-component systems), polyaspartics, polyacrylates, polyester resins, alkyd resins, PVC plastisols, PVC organosols, thermoplastics, and unsaturated polyester resins. Such liquid compositions are preferably converted into a solid state by usual processes, e.g. physical drying and/or chemical curing, such as free-radical copolymerization or polyaddition.

The invention further relates to a process of controlling the rheology of a liquid composition, comprising adding to the liquid composition
a) one or more urea components having a number average molecular weight Mn above 350 g/mol, and
b) one or more carboxylic acid components according to formula (I)

   HO-R¹-COOH,
wherein R¹ represents an organic group having 3 to 75 carbon atoms,
wherein the weight ratio of components a) : b) is in the range of 60:40 to 10:90.

In one embodiment, in the process of controlling the rheology of a liquid composition, a further rheology control agent, which is preferably a polyamine compound and more preferably a polyethyleneimine compound or its derivative, is added to the liquid composition.

In a preferred embodiment, components a) and b) are added to the liquid composition as a pre-mix, for example as a liquid pre-mix. In some embodiments, the pre-mix may comprise besides a) and b) also one or more organic diluents c) and optionally one or more salts d) as described above.

The components a) and b) may be mixed together separately under suitable conditions known to the skilled person and after stirring may be added to the liquid composition. The pre-mix may be added to the liquid composition immediately upon completion of the pre-mix or after a specified time.

In another embodiment, components a) and b) are added to the liquid composition as separate components, either consecutively or simultaneously. Components a) and b) may be added to the liquid composition individually, i.e. component a) or component b) may be added to the liquid composition and the remaining component is added afterwards. Furthermore, component a) and component b) may be added to the liquid composition in any given order. Alternatively, both components a) and b) may be added to the liquid composition as individual components but at the same time.

The invention is illustrated further below giving reference to examples. The choice of the respective reaction conditions, as e.g. the reaction temperature, reaction time and dosing rates are known to the skilled person and are illustrated in more detail in the working examples.

### Examples

### Synthesis Examples

### Examples (according to the invention)

### Synthesis Example 1 (SE1)

A four-necked round-bottom flask equipped with stirrer, thermometer and reflux condenser was charged with 95.0 g N-butylpyrrolidone and 2.6 g (0.06 mol) lithium chloride and heated up to 80° C under nitrogen atmosphere. After 30 minutes 12.2 g (0.070 mol) tolylene diisocyanate with 80 % content of 2,4-diisocyanatotoluene (in the following abbreviated by TDI T 80) were added to the mixture.

A mixture of 4.8 g (0.035 mol) m-xylylenediamine and 21.7 g N-butylpyrrolidone was added using a dosing pump with a rate of 3.0 mL per minute.

After three hours reaction time 7.6 g (0.07 mol) benzyl alcohol were added and the mixture was stirred for 30 minutes. 42.0 g (0.140 mol) 12-hydroxystearic acid were added and stirring was continued for another 30 minutes.

The product was a viscous, orange liquid (GPC: Mₙ=3757 g/mol; M_{w}=10093 g/mol).

### Synthesis Example 2 (SE2)

A four-necked round-bottom flask equipped with stirrer, thermometer and reflux condenser was charged with 100.0 g N-butylpyrrolidone and 2.6 g (0.06 mol) lithium chloride and heated up to 80° C under nitrogen atmosphere. After 30 minutes 12.2 g (0.07 mol) TDI T 80 was added to the mixture.

A mixture of 2.1 g (0.03 mol) ethylenediamine and 21.7 g N-butylpyrrolidone was added using a dosing pump with a rate of 3.0 mL per minute.

After three hours reaction time 7.6 g (0.07 mol) benzyl alcohol were added and the mixture was stirred for 30 minutes. 42.0 g (0.14 mol) 12-hydroxystearic acid were added and stirring was continued for another 30 minutes.

The product was a viscous, orange liquid (GPC: Mₙ=2559 g/mol; M_{w}=10660 g/mol).

### Synthesis Example 3 (SE3)

A four-necked round-bottom flask equipped with stirrer, thermometer and reflux condenser was charged with 107.0 g N-butylpyrrolidone and 2.6 g (0.06 mol) lithium chloride and heated up to 80° C under nitrogen atmosphere. After 30 minutes 12.2 g (0.07 mol) TDI T 80 were added to the mixture.

A mixture of 5.95 g (0.035 mol) isophorone diamine and 21.7 g N-butylpyrrolidone was added using a dosing pump with a rate of 3.0 mL per minute.

After three hours reaction time 7.6 g (0.07 mol) benzyl alcohol were added and the mixture was stirred for 30 minutes. 42.0 g (0.14 mol) 12-hydroxystearic acid were added and stirring was continued for another 30 minutes.

The product was a viscous, orange liquid (GPC: Mₙ=2812 g/mol; M_{w}=8651 g/mol).

### Synthesis Example 4 (SE4)

A four-necked round-bottom flask equipped with stirrer, thermometer and reflux condenser was charged with 300.0 g N-butylpyrrolidone and 7.8 g (0.0185 mol) lithium chloride and heated up to 80° C under nitrogen atmosphere. After 30 minutes 36.5 g (0.21 mol) TDI T 80 were added to the mixture.

A mixture of 14.4 g (0.105 mol) m-xylylenediamine and 65.1 g N-butylpyrrolidone was added using a dosing pump with a rate of 5.0 mL per minute.

After three hours reaction time 157.5 g (0.525 mol) 12-hydroxystearic acid were added and stirring was continued for another 30 minutes.

The product was a viscous, orange liquid (GPC: Mₙ=2301 g/mol; M_{w}=11999 g/mol).

### Synthesis Example 5 (SE5)

A four-necked round-bottom flask equipped with stirrer, thermometer and reflux condenser was charged with 113.1 g N-butylpyrrolidone and 2.6 g (0.06 mol) lithium chloride and heated up to 80° C under nitrogen atmosphere. After 30 minutes 15.56 g (0.07 mol) isophorone diisocyanate were added to the mixture.

A mixture of 4.8 g (0.035 mol) m-xylylenediamine and 21.7 g N-butylpyrrolidone was added using a dosing pump with a rate of 3.0 mL per minute.

After three hours reaction time 7.6 g (0.07 mol) benzyl alcohol were added and the mixture was stirred for 30 minutes. 42.0 g (0.14 mol) 12-hydroxystearic acid were added and stirring was continued for another 30 minutes.

The product was a viscous, yellow liquid (GPC: Mₙ=1710 g/mol; M_{w}=3266 g/mol).

### Synthesis Example 6 (SE6)

A four-necked round-bottom flask equipped with stirrer, thermometer and reflux condenser was charged with 95.0 g N-butylpyrrolidone and 2.34 g (0.050 mol) lithium chloride and heated up to 80° C under nitrogen atmosphere. After 30 minutes 12.2 g (0.07 mol) TDI T 80 were added to the mixture.

A mixture of 4.8 g (0.035 mol) m-xylylenediamine and 21.7 g N-butylpyrrolidone was added using a dosing pump with a rate of 3.0 mL per minute.

After three hours reaction time 14.44 g (0.07 mol) butyltriglycol were added and the mixture was stirred for 30 minutes. 42.0 g (0.14 mol) 12-hydroxystearic acid were added and stirring was continued for another 30 minutes.

The product was a viscous, orange liquid (GPC: Mₙ=2685 g/mol; M_{w}=10225 g/mol).

### Synthesis Example 7 (SE7)

A four-necked round-bottom flask equipped with stirrer, thermometer and reflux condenser was charged with 52.4 g N-butylpyrrolidone and 2.1 g (0.06 mol) lithium chloride and heated up to 80° C under nitrogen atmosphere. After 30 minutes 5.5 g (0.032 mol) TDI T 80 and 2.83 g (0.007 mol) monoadduct made from TDI T65 and butyltriglycol (synthesized as described in EP 1048681 B1, Example 2) were added to the mixture.

A mixture of 4.8 g (0.035 mol) m-xylylenediamine and 21.7 g N-butylpyrrolidone was added using a dosing pump with a rate of 3.0 mL per minute. After three hours reaction time 42.0 g (0.14 mol) 12-hydroxystearic acid were added and stirring was continued for another 30 minutes.

The product was a milky, yellow solid (Mₙ= 3684 g/mol).

### Synthesis Example 8 (SE8)

A four-necked round-bottom flask equipped with stirrer, thermometer and reflux condenser was charged with 95 g N-butylpyrrolidone and 2.6 g (0.065 mol) lithium chloride and heated up to 80° C under nitrogen atmosphere. After 30 minutes 12.2 g (0.070 mol) TDI T 80 were added to the mixture.

A mixture of 4.8 g (0.035 mol) m-xylylenediamine and 21.7 g N-butylpyrrolidone was added using a dosing pump with a rate of 3.0 mL per minute.

After three hours reaction time 14.4 g (mol) triethylene glycol monobutyl ether were added and the mixture was stirred for 30 minutes. 42.0 g (0.14 mol) 12-hydroxystearic acid were added and stirring was continued for another 30 minutes.

The product was a viscous, orange liquid (GPC: Mₙ= 4711; M_{w}= 13194).

### Synthesis Example 9 (SE9)

A four-necked round-bottom flask equipped with stirrer, thermometer and reflux condenser was charged with 95 g N-butylpyrrolidone and 2.6 g (0.065 mol) lithium chloride and heated up to 80° C under nitrogen atmosphere. After 30 minutes 12.2 g (0.070 mol) TDI T 80 were added to the mixture.

A mixture of 4.8 g (0.035 mol) m-xylylenediamine and 21.7 g N-butylpyrrolidone was added using a dosing pump with a rate of 3.0 mL per minute.

After three hours reaction time 8.26 g (mol) ethylene glycol monobutyl ether were added and the mixture was stirred for 30 minutes. 42.0 g (0.14 mol) 12-hydroxystearic acid were added and stirred for another 30 minutes.

The product was a viscous, yellow liquid (GPC: Mₙ= 4725; M_{w}= 18860).

### Comparative Examples (non-inventive)

### Comparative Example 1 (SC1)

A four-necked round-bottom flask equipped with stirrer, thermometer and reflux condenser was charged with 102.7 g N-butylpyrrolidone and 2.6 g (0.060 mol) lithium chloride and heated up to 80° C under nitrogen atmosphere. After 30 minutes 12.2 g (0.07 mol) TDI T 80 were added to the mixture.

A mixture of 4.8 g (0.035 mol) m-xylylenediamine and 21.7 g N-butylpyrrolidone was added using a dosing pump with a rate of 3.0 mL per minute.

After three hours reaction time 7.6 g (0.07 mol) benzyl alcohol were added and the mixture was stirred for 30 minutes. 39.8 g (0.140 mol) stearic acid were added and stirring was continued for another 30 minutes.

The product was a viscous, orange liquid (GPC: Mₙ=3716 g/mol; M_{w}=10291 g/mol).

### Comparative Example 2 (SC2)

A four-necked round-bottom flask equipped with stirrer, thermometer and reflux condenser was charged with 95.0 g N-butylpyrrolidone and 2.6 g (0.060 mol) lithium chloride and heated up to 80° C under nitrogen atmosphere. After 30 minutes 12.2 g (0.07 mol) TDI T 80 were added to the mixture.

A mixture of 4.8 g (0.035 mol) m-xylylenediamine and 21.7 g N-butylpyrrolidone was added using a dosing pump with a rate of 3.0 mL per minute.

After three hours reaction time 7.6 g (0.07 mol) benzyl alcohol were added and the mixture was stirred for 30 minutes.

The product was a viscous, orange liquid (GPC: Mₙ=2607 g/mol; M_{w}=8665 g/mol).

### Comparative Example 3 (SC3)

A four-necked round-bottom flask equipped with stirrer, thermometer and reflux condenser was charged with 103.0 g N-butylpyrrolidone and 2.6 g (0.06 mol) lithium chloride and heated up to 80° C under nitrogen atmosphere. After 30 minutes 12.2 g (0.070 mol) TDI T 80 were added to the mixture.

A mixture of 4.8 g (0.035 mol) m-xylylenediamine and 21.7 g N-butylpyrrolidone was added using a dosing pump with a rate of 3.0 mL per minute.

After three hours reaction time 7.6 g (0.07 mol) benzyl alcohol were added and the mixture was stirred for 30 minutes. 40.1 g (0.140 mol) 12-hydroxystearic alcohol were added and stirring was continued for another 30 minutes.

The product was a viscous, orange liquid (GPC: Mₙ=1962; M_{w}=6872).

### Comparative Example 4 (SC4)

A mixture of 26.7 g (0.089 mol) 12-hydroxystearic acid and 80.0 g N-butylpyrrolidone was stirred under heat until the acid was dissolved.

The product was a clear, colorless product.

### Comparative Example 5 (SC5)

A four-necked round-bottom flask equipped with stirrer, thermometer and reflux condenser was charged with 300.0 g N-butylpyrrolidone and 7.8 g (0.185 mol) lithium chloride and heated up to 80°C under nitrogen atmosphere. After 30 minutes 36.5g (0.210 mol) TDI T 80 were added to the mixture.

A mixture of 14.4 g (0.105 mol) m-xylylendiamine and 65.1 g N-butylpyrrolidone was added using a dosing pump with a rate of 5.0 mL per minute.

After three hours reaction time 63.4 g (0.210 mol) 12-hydroxystearic acid were added and stirring was continued for another 30 minutes.

The product was a viscous, orange liquid (GPC: Mₙ= 4159 g/mol; M_{w}= 15319 g/mol).

### Application examples and testing

**Table 1: Raw materials**

| Product name | Description | Manufacturer |
|---|---|---|
| Epikote 828 | Liquid epoxy resin produced from bisphenol A resin and epichlorohydrin | Hexion Inc. |
| Grilonit RV 1812 | 1,6-hexane diglycidyl ether | EMS-CHEMIE AG |
| DISPERBYK-2152 | Hyperbranched polyester W&D additive | BYK Chemie GmbH |
| BYK-1790 | Mixture of foam-destroying polymers | BYK Chemie GmbH |
| Bayferrox 130M | Iron oxide red pigment | LANXESS |
| EWO | Barium sulfate | Sachtleben Minerals GmbH & Co. KG |
| Luzenac 20M2 | Multipurpose fine talc/chlorite | Blagden Specialty Chemicals Ltd. |
| Cardolite LITE 2001 LV | Phenalkamines | Cardolite Specialty Chemicals Europe NV |

### Application test system: 2 pack-epoxy protective coating

Component A of the protective coating was produced using the formulation in table 2. Subsequently, 100 g of component A of the formulation was filled in 150 mL glass bottles. After the formulation was cooled down to room temperature (23°C), 1.0 % by weight, based on component A of the active substance of the respective rheology additive SE1 to SE9 and SC1 to SC4 was incorporated into the formulation under stirring with a Dispermat CV (Fa. Getzmann) for 2 min. at 1000 rpm, using a 4 cm diameter toothed plate. Active substance refers to all components of the mixture obtained in the synthesis examples, with exception of the organic diluent (c) contained. For the production of Application Example AC5, no rheology additive was incorporated. Afterwards the samples were stored at room temperature for 24 hours before they were applied. Before application, 33.1 g hardener (component B) was added to component A and incorporated with a spatula by hand stirring until the sample looked homogeneous. After homogenizing the samples were applied with a stepped doctor blade Model 421/S (Erichsen GmbH & Co KG) with 50-500 and 550-1000 µm wet film thickness. The application was done on contrast cards 2801 (BYK-Gardner GmbH) using the automatic applicator byko-drive XL (BYK-Gardner GmbH) with an application speed of 50 mm/s. Directly after application the draw down was hanged up vertical at room temperature until it was dried. After drying the sag resistance was evaluated visually. Therefore, the wet film thickness was chosen that shows after drying a clear separation of the draw down, no runner and also no bulge building between the applied film thickness. Wet film thicknesses obtained are listed in table 3; film thicknesses of more than 1000 µm were not applied, therefore the value "≥ 1000 µm" refers to a minimum thickness of 1000 µm that could be observed.

| Table 2: Formulation of application test: 2pack-EP protective coating | | |
|---|---|---|
| | Product name | |
| Component A | Epikote 828 | 20.0 g |
| | Grilonit RV 1812 | 8.0 g |
| | DIS-2152 | 0.5 g |
| | BYK-1790 | 0.5 g |
| | Bayferrox 130 M | 4.0 g |
| | EWO | 36.0 g |
| | Luzenac 20 M2 | 11.0 g |
| | | |
| | *Dispermat, 40°C, 30 min., 8500 rpm., 4cm- toothed plate* | |
| | | |
| | Epikote 828 | 20.0 g |
| | | |
| Sum of Component A | | 100.0 g |
| | | |
| Component B | Cardolite LITE 2001 LV | 33.1 g |
| | | |
| Sum of Components A and B | | 133.1 g |
| | | |

| | | |
|---|---|---|
| Mixing ratio component A : component B = 100 : 33.1 | | |

**Table 3: Application test results**

| Synthesis Example No. | Application Example No. | Sag resistance/ µm |
|---|---|---|
| SE1 | AE1 | 800 |
| SE2 | AE2 | 700 |
| SE3 | AE3 | 500 |
| SE4 | AE4 | 900 |
| SE5 | AE5 | 500 |
| SE6 | AE6 | 600 |
| SE7 | AE7 | ≥ 1000 |
| SE8 | AE8 | ≥ 1000 |
| SE9 | AE9 | 700 |
| SE1 + co-thickener* | AE10 | ≥ 1000 |
| SC1 | AC1 | 250 |
| SC2 | AC2 | 50 |
| SC3 | AC3 | 100 |
| SC4 | AC4 | 150 |
| SC5 | AC5 | 100 |
| --- | AC6 | 50 |

| | | |
|---|---|---|
| *): In this example, the additive prepared in SE1 has been combined with the polyethyleneimine derivative described in "Component b1.2" of EP 3161036 B1 as co-thickener. SE1 was incorporated into the epoxy component A in the same amount and using the same method as described for the other examples. The additional rheology control additive (reaction mixture obtained in "Component b1.2" of EP 3161036 B1) was incorporated into the hardener component B at a dosage of 0.9 % by weight, referring to the amount of component B used. | | |

It was surprisingly found that inventive composition Example AE1 provided a highly improved sag resistance compared to non-inventive Comparison Examples SC1, SC2, SC3, SC4 and SC5. Whereas Example AE1/SE1 contains a urea component as well as 12-hydroxystearic acid, the non-inventive comparison samples SC1 to SC3 and SC5 lack acid or 12-hydroxystearic acid, respectively. Therefore, the non-inventive comparison samples show a lower rheological effectiveness measured by sag resistance than the examples according to the present invention. These samples are obviously better suitable to improve the sag resistance than the non-inventive comparison samples.

## Claims

1. A composition comprising
a) 10 to 60 % by weight of one or more urea components having a number average molecular weight Mn above 350 g/mol, determined by gel permeation chromatography (eluent: solution of lithium bromide (content 5g/l) in dimethylacetamide, standard: polymethylmethacrylate, column temperature: 80°C) according to DIN 55672 part 2 (year: 2008) and
b) 40 to 90 % by weight of one or more carboxylic acid components according to
formula (I) HO-R¹-COOH,
wherein R¹ represents an organic group having 3 to 75 carbon atoms,
wherein the % by weight are calculated on the sum of components a) and b).

2. The composition according to claim 1, wherein the urea component comprises aromatic groups.

3. The composition according to any one of the preceding claims, wherein the urea component comprises molecules containing at least one urea group and at least one urethane group.

4. The composition according to any one of the preceding claims, wherein the urea component comprises one or more carboxylic acid groups.

5. The composition according to any of the preceding claims, wherein R¹ represents a hydrocarbyl group having 9 to 23 carbon atoms.

6. The composition according to any one of the preceding claims, wherein the composition further comprises one or more organic diluents c).

7. The composition according to any one of the preceding claims, wherein the composition further comprises one or more salts d).

8. The composition according to any one of the preceding claims, wherein the mixture of components a), b), c) and d) of the composition together has an acid number in the range of 20 to 60 mg KOH/g.

9. The composition according to any one of the preceding claims, comprising
i. the one or more urea components a) having a number average molecular weight Mn above 350 g/mol and the one or more carboxylic acid components b) according to formula (I) HO-R¹-COOH,
wherein R¹ represents an organic group having 3 to 75 carbon atoms,
wherein the sum of a) and b) is 15 to 90 % by weight,
ii. 10.0 to 85.0 % by weight of one or more organic diluents c), and
iii. 0.0 to 8.0 % by weight of one or more salts d),
wherein the % by weight are calculated on the sum of a), b), c) and d).

10. The composition according to any one of the preceding claims comprising
a) 3.0 to 40.0 % by weight of one or more urea components having a number average molecular weight Mn above 350 g/mol,
b) 12.0 to 60.0 % by weight of one or more carboxylic acid components according to
formula (I) HO-R¹-COOH, wherein R¹ represents an organic group having 3 to 75 carbon atoms,
c) 10.0 to 85.0 % by weight of one or more organic diluents, and
d) 0.0 to 8.0 % by weight of one or more salts,
wherein the % by weight are calculated on the sum of a), b), c) and d),
with the proviso that
the one or more urea components a) are present in an amount of 10 to 60 % by weight, and
the one or more carboxylic acid components b) are present in an amount of 40 to 90 % by weight, calculated on the sum of components a) and b).

11. Use of the composition according to any one of the preceding claims to control the rheology of a liquid composition.

12. A composition which is liquid at a temperature of 23°C comprising 0.1 to 7.5 % by weight, calculated on the total weight of the liquid composition, of a mixture of
a) one or more urea components having a number average molecular weight Mn above 350 g/mol, determined by gel permeation chromatography (eluent: solution of lithium bromide (content 5g/l) in dimethylacetamide, standard:
polymethylmethacrylate, column temperature: 80°C) according to DIN 55672 part 2 (year: 2008) and
b) one or more carboxylic acid components according to formula (I)
HO-R¹-COOH,
wherein R¹ represents an organic group having 3 to 75 carbon atoms and wherein the weight ratio of components a) : b) is in the range of 10:90 to 60:40.

13. The liquid composition according to claim 12, wherein the composition comprises between 0.0 and 7.0 % of water, calculated on the total weight of the liquid composition.

14. The liquid composition according to any one of claims 12 or 13, wherein the composition comprises between 0.0 and 10.0 % by weight, calculated on the total weight of the liquid composition, of a volatile organic solvent.

15. The liquid composition according to any one of claims 12 to 14, wherein the composition comprises a film-forming resin.

16. A process of controlling the rheology of a liquid composition, comprising the step of adding to the liquid composition
a) one or more urea components having a number average molecular weight Mn above 350 g/mol, determined by gel permeation chromatography (eluent: solution of lithium bromide (content 5g/l) in dimethylacetamide, standard:
polymethylmethacrylate, column temperature: 80°C) according to DIN 55672 part 2 (year: 2008) and
b) one or more carboxylic acid components according to formula (I)
HO-R¹-COOH,
wherein R¹ represents an organic group having 3 to 75 carbon atoms,
wherein the weight ratio of components a) : b) is in the range of 60:40 to 10:90.

## Patentansprüche

1. Zusammensetzung, die Folgendes umfasst:
a) 10 bis 60 Gew.-% einer oder mehrerer Harnstoffkomponenten mit einem Zahlenmittel der Molmasse Mn von mehr als 350 g/mol, das mittels Gelpermeationschromatographie (Eluent: Lösung von Lithiumbromid (Gehalt 5 g/l) in Dimethylacetamid, Standard: Polymethylmethacrylat, Säulentemperatur: 80 °C) gemäß DIN 55672 Teil 2 (Jahr: 2008) bestimmt wird, und
b) 40 bis 90 Gew.-% einer oder mehrerer Carbonsäurekomponenten gemäß Formel (I)
HO-R¹-COOH,
wobei R¹ eine organische Gruppe mit 3 bis 75 Kohlenstoffatomen darstellt,
wobei die Gew.-% basierend auf der Summe der Komponenten a) und b) berechnet werden.

2. Zusammensetzung nach Anspruch 1, wobei die Harnstoffkomponente aromatische Gruppen umfasst.

3. Zusammensetzung nach einem der vorhergehenden Ansprüche, wobei die Harnstoffkomponente Moleküle umfasst, die mindestens eine Harnstoffgruppe und mindestens eine Urethangruppe umfassen.

4. Zusammensetzung nach einem der vorhergehenden Ansprüche, wobei die Harnstoffkomponente eine oder mehrere Carbonsäuregruppen umfasst.

5. Zusammensetzung nach einem der vorhergehenden Ansprüche, wobei R¹ eine Kohlenwasserstoffgruppe mit 9 bis 23 Kohlenstoffatomen darstellt.

6. Zusammensetzung nach einem der vorhergehenden Ansprüche, wobei die Zusammensetzung weiterhin ein oder mehrere organische Verdünnungsmittel c) umfasst.

7. Zusammensetzung nach einem der vorhergehenden Ansprüche, wobei die Zusammensetzung weiterhin ein oder mehrere Salze d) umfasst.

8. Zusammensetzung nach einem der vorhergehenden Ansprüche, wobei die Mischung der Komponenten a), b), c) und d) der Zusammensetzung zusammen eine Säurezahl im Bereich von 20 bis 60 mg KOH/g aufweist.

9. Zusammensetzung nach einem der vorhergehenden Ansprüche, die Folgendes umfasst:
i. die eine oder die mehreren Harnstoffkomponenten a) mit einem Zahlenmittel der Molmasse Mn von mehr als 350 g/mol und die eine oder die mehreren Carbonsäurekomponenten b) gemäß Formel (I) HO-R¹-COOH,
wobei R¹ eine organische Gruppe mit 3 bis 75 Kohlenstoffatomen darstellt,
wobei die Summe von a) und b) 15 bis 90 Gew.-% beträgt,
ii. 10,0 bis 85,0 Gew.-% eines oder mehrerer organischer Verdünnungsmittel c) und
iii. 0,0 bis 8,0 Gew.-% eines oder mehrerer Salze d),
wobei die Gew.-% basierend auf der Summe von a), b), c) und d) berechnet werden.

10. Zusammensetzung nach einem der vorhergehenden Ansprüche, die Folgendes umfasst:
a) 3,0 bis 40,0 Gew.-% einer oder mehrerer Harnstoffkomponenten mit einem Zahlenmittel der Molmasse Mn von mehr als 350 g/mol,
b) 12,0 bis 60,0 Gew.-% einer oder mehrerer Carbonsäurekomponenten gemäß Formel (I)
HO-R¹-COOH,
wobei R¹ eine organische Gruppe mit 3 bis 75 Kohlenstoffatomen darstellt,
c) 10,0 bis 85,0 Gew.-% eines oder mehrerer organischer Verdünnungsmittel und
d) 0,0 bis 85,0 Gew.-% eines oder mehrerer Salze,
wobei die Gew.-% basierend auf der Summe von a), b), c) und d) berechnet werden, mit der Maßgabe, dass
die eine oder die mehreren Harnstoffkomponenten a) in einer Menge von 10 bis 60 Gew.-% vorhanden sind, und
die eine oder die mehreren Carbonsäurekomponenten b) in einer Menge von 40 bis 90 Gew.-%, berechnet basierend auf der Summe der Komponenten a) und b), vorhanden sind.

11. Verwendung der Zusammensetzung nach einem der vorhergehenden Ansprüche zur Regelung der Rheologie einer flüssigen Zusammensetzung.

12. Zusammensetzung, die bei einer Temperatur von 23 °C flüssig ist, die 0,1 bis 7,5 Gew.-%, berechnet basierend auf dem Gesamtgewicht der flüssigen Zusammensetzung, einer Mischung des Folgenden umfasst:
a) einer oder mehrerer Harnstoffkomponenten mit einem Zahlenmittel der Molmasse Mn von mehr als 350 g/mol, das mittels Gelpermeationschromatographie (Eluent: Lösung von Lithiumbromid (Gehalt 5 g/l) in Dimethylacetamid, Standard: Polymethylmethacrylat, Säulentemperatur: 80 °C) gemäß DIN 55672 Teil 2 (Jahr: 2008) bestimmt wird, und
b) einer oder mehrerer Carbonsäurekomponenten gemäß Formel (I) HO-R¹-COOH,
wobei R¹ eine organische Gruppe mit 3 bis 75 Kohlenstoffatomen darstellt
und wobei das Gewichtsverhältnis der Komponenten a) : b) im Bereich von 10:90 bis 60:40 liegt.

13. Flüssige Zusammensetzung nach Anspruch 12, wobei die Zusammensetzung zwischen 0,0 und 7,0 % Wasser, berechnet basierend auf dem Gesamtgewicht der flüssigen Zusammensetzung, umfasst.

14. Flüssige Zusammensetzung nach einem der Ansprüche 12 oder 13, wobei die Zusammensetzung zwischen 0,0 und 10,0 Gew.-%, berechnet basierend auf dem Gesamtgewicht der flüssigen Zusammensetzung, eines flüchtigen organischen Lösungsmittels umfasst.

15. Flüssige Zusammensetzung nach einem der Ansprüche 12 bis 14, wobei die Zusammensetzung ein filmbildendes Harz umfasst.

16. Verfahren zur Regelung der Rheologie einer flüssigen Zusammensetzung, das den Schritt des Zugebens des Folgenden zur flüssigen Zusammensetzung umfasst:
a) einer oder mehrerer Harnstoffkomponenten mit einem Zahlenmittel der Molmasse Mn von mehr als 350 g/mol, das mittels Gelpermeationschromatographie (Eluent: Lösung von Lithiumbromid (Gehalt 5 g/l) in Dimethylacetamid, Standard: Polymethylmethacrylat, Säulentemperatur: 80 °C) gemäß DIN 55672 Teil 2 (Jahr: 2008) bestimmt wird, und
b) einer oder mehrerer Carbonsäurekomponenten gemäß Formel (I) HO-R¹-COOH,
wobei R¹ eine organische Gruppe mit 3 bis 75 Kohlenstoffatomen darstellt,
wobei das Gewichtsverhältnis der Komponenten a) : b) im Bereich von 60:40 bis 10:90 liegt.

## Revendications

1. Composition comprenant
a) 10 à 60 % en poids d'un ou plusieurs composants d'urée ayant un poids moléculaire moyen en nombre Mn supérieur à 350 g/mol, déterminé par chromatographie par perméation de gel (éluant : solution de bromure de lithium (teneur 5 g/l) dans du diméthylacétamide, étalon : poly(méthacrylate de méthyle), température de colonne : 80 °C) selon DIN 55672 partie 2 (année : 2008) et
b) 40 à 90 % en poids d'un ou plusieurs composants d'acide carboxylique selon la formule (I) HO-R¹-COOH,
dans laquelle R¹ représente un groupe organique ayant 3 à 75 atomes de carbone,
dans laquelle les % en poids sont calculés sur la somme des composants a) et b).

2. Composition selon la revendication 1, dans laquelle le composant d'urée comprend des groupes aromatiques.

3. Composition selon l'une quelconque des revendications précédentes, dans laquelle le composant d'urée comprend des molécules contenant au moins un groupe urée et au moins un groupe uréthane.

4. Composition selon l'une quelconque des revendications précédentes, dans laquelle le composant d'urée comprend un ou plusieurs groupes acide carboxylique.

5. Composition selon l'une quelconque des revendications précédentes, dans laquelle R¹ représente un groupe hydrocarbyle ayant 9 à 23 atomes de carbone.

6. Composition selon l'une quelconque des revendications précédentes, la composition comprenant en outre un ou plusieurs diluants organiques c).

7. Composition selon l'une quelconque des revendications précédentes, la composition comprenant en outre un ou plusieurs sels d).

8. Composition selon l'une quelconque des revendications précédentes, dans laquelle le mélange de composants a), b), c) et d) de la composition présente conjointement un indice d'acide dans la plage de 20 à 60 mg KOH/g.

9. Composition selon l'une quelconque des revendications précédentes, comprenant
i. les un ou plusieurs composants d'urée a) ayant un poids moléculaire moyen en nombre Mn supérieur à 350 g/mol et les un ou plusieurs composants d'acide carboxylique b) selon la formule (I) HO-R¹-COOH,
dans laquelle R¹ représente un groupe organique ayant 3 à 75 atomes de carbone, dans laquelle la somme de a) et b) est de 15 à 90 % en poids,
ii. 10,0 à 85,0 % en poids d'un ou plusieurs diluants organiques c), et
iii. 0,0 à 8,0 % en poids d'un ou plusieurs sels d),
dans laquelle les % en poids sont calculés sur la somme de a), b), c) et d).

10. Composition selon l'une quelconque des revendications précédentes comprenant
a) 3,0 à 40,0 % en poids d'un ou plusieurs composants d'urée ayant un poids moléculaire moyen en nombre Mn supérieur à 350 g/mol,
b) 12,0 à 60,0 % en poids d'un ou plusieurs composants d'acide carboxylique selon la formule (I) HO-R¹-COOH,
dans laquelle R¹ représente un groupe organique ayant 3 à 75 atomes de carbone,
c) 10,0 à 85,0 % en poids d'un ou plusieurs diluants organiques, et
d) 0,0 à 8,0 % en poids d'un ou plusieurs sels,
dans laquelle les % en poids sont calculés sur la somme de a), b), c) et d), à condition que les un ou plusieurs composants d'urée a) soient présents en une quantité de 10 à 60 % en poids, et
les un ou plusieurs composants d'acide carboxylique b) soient présents en une quantité de 40 à 90 % en poids, calculée sur la somme des composants a) et b).

11. Utilisation de la composition selon l'une quelconque des revendications précédentes pour réguler la rhéologie d'une composition liquide.

12. Composition qui est liquide à une température de 23 °C comprenant 0,1 à 7,5 % en poids, calculés sur le poids total de la composition liquide, d'un mélange de
a) un ou plusieurs composants d'urée ayant un poids moléculaire moyen en nombre Mn supérieur à 350 g/mol, déterminé par chromatographie par perméation de gel (éluant : solution de bromure de lithium (teneur 5 g/l) dans du diméthylacétamide, étalon : poly(méthacrylate de méthyle), température de colonne : 80 °C) selon DIN 55672 partie 2 (année : 2008) et
b) un ou plusieurs composants d'acide carboxylique selon la formule (I)
HO-R¹-COOH,
dans laquelle R¹ représente un groupe organique ayant 3 à 75 atomes de carbone et dans laquelle le rapport en poids des composants a):b) est dans la plage de 10:90 à 60:40.

13. Composition liquide selon la revendication 12, la composition comprenant entre 0,0 et 7,0 % d'eau, calculés sur le poids total de la composition liquide.

14. Composition liquide selon l'une quelconque des revendications 12 ou 13, la composition comprenant entre 0,0 et 10,0% en poids, calculé sur le poids total de la composition liquide, d'un solvant organique volatil.

15. Composition liquide selon l'une quelconque des revendications 12 à 14, la composition comprenant une résine filmogène.

16. Procédé de régulation de la rhéologie d'une composition liquide, comprenant l'étape d'ajout à la composition liquide de
a) un ou plusieurs composants d'urée ayant un poids moléculaire moyen en nombre Mn supérieur à 350 g/mol, déterminé par chromatographie par perméation de gel (éluant : solution de bromure de lithium (teneur 5 g/l) dans du diméthylacétamide, étalon : poly(méthacrylate de méthyle), température de colonne : 80 °C) selon DIN 55672 partie 2 (année : 2008) et
b) un ou plusieurs composants d'acide carboxylique selon la formule (I)
HO-R¹-COOH,
dans laquelle R¹ représente un groupe organique ayant 3 à 75 atomes de carbone,
dans laquelle le rapport en poids des composants a):b) est dans la plage de 60:40 à 10:90.
